# EUROPÄISCHE PATENTSCHRIFT

(11) **EP 3 978 769 B1**
(45) Veröffentlichungstag und Bekanntmachung des Hinweises auf die Patenterteilung: **07.06.2023**
(21) Anmeldenummer: 20199507.3
(22) Anmeldetag: 01.10.2020
(51) Int. Cl.: F16D 1/08, F16B 1/00, F16D 1/06, F24F 13/08

(54) **ACHSAUFNAHME FÜR EINEN LUFTKLAPPENDREHANTRIEB UND LUFTKLAPPENDREHANTRIEB**
DAMPER ROTARY DRIVE AND AXLE HOUSING FOR A DAMPER ROTARY DRIVE
LOGEMENT D'AXE POUR UN SERVOMOTEUR POUR VOLET D'AIR ET SERVOMOTEUR POUR VOLET D'AIR

(43) Veröffentlichungstag der Anmeldung: 06.04.2022
(73) Patentinhaber: Siemens Schweiz AG, 8047 Zürich (CH)
(72) Erfinder: Ito, Hideki, 6318 Walchwil (CH); Grossenbacher, Christian, 5622 Waltenschwil (CH)
(74) Vertreter: Siemens Patent Attorneys

(56) Entgegenhaltungen:
- DE-A1- 19 516 425
- US-A1- 2002 136 602
- US-A1- 2009 052 982

## Beschreibung

Die Erfindung betrifft im weitesten Sinne eine Stellantriebseinrichtung sowie konkret eine Stellantriebseinrichtung für eine Luftklappe oder dergleichen in einer Anlage für die Heizung, Lüftung oder Kühlung in einem Gebäude (Luftklappendrehantrieb). Stellantriebseinrichtungen in Form von Luftklappendrehantrieben sind an sich bekannt.

Ein Luftklappendrehantrieb umfasst eine Antriebseinrichtung, üblicherweise einen Elektromotor, Mittel zur kraft- und formschlüssigen Kontaktierung einer Achse einer Luftklappe (Achsaufnahme) sowie optional ein Getriebe zwischen der Antriebseinrichtung und der Achsaufnahme.

Achsaufnahmen sind an sich bekannt, zum Beispiel aus der US 6,505,991. Die Anmelderin bietet unter der Produktbezeichnung GS MK2 eine eigene Achsaufnahme an.

Aus der DE 195 16 425 A1 ist eine Einrichtung zur Befestigung einer Achse an einer um eine Rotationsachse drehbaren Nabe bekannt, die ein erstes Gewinde und eine Schraube mit einem zweiten Gewinde und einem dritten Gewinde aufweist. Das zweite Gewinde hat die halbe Steigung des dritten Gewindes und ist in das erste Gewinde geschraubt ist. Ein Klemmmittel der Einrichtung weist einen ersten Teil und einen zweiten Teil auf, der über ein viertes Gewinde in das dritte Gewinde geschraubt ist. Durch Drehen der Schraube ist der erste Teil mit der Schraube in einer ersten Richtung bewegbar, wobei sich der zudem der zweite Teil mit doppelter Geschwindigkeit entgegengesetzt zur ersten Richtung bewegt. Die Achse kann durch das Drehen der Schraube in einem weiten Durchmesserbereich zentriert zur Rotationsachse zwischen den ersten Teil und den zweiten Teil eingeklemmt werden.

Aus der US 2009/0052982 A1 ist ein selbstzentrierender Wellenadapter bekannt, der eine erste Klemmbacke, eine zweite Klemmbacke und einen Betätigungsmechanismus umfasst. Die erste Klemmbacke und die zweite Klemmbacke definieren eine Öffnung zur Aufnahme einer Welle. Der Betätigungsmechanismus ist in der Lage, eine Kraft auf die erste Klemmbacke und die zweite Klemmbacke auszuüben, wodurch eine Bewegung der ersten Klemmbacke und der zweiten Klemmbacke in entgegengesetzte Richtungen erzeugt wird. Die Bewegung der ersten Backe und der zweiten Backe kann die Öffnung vergrößern oder verkleinern. In einigen Fällen kann die Öffnung unabhängig von der Größe der Öffnung ein relativ konstantes Zentrum beibehalten. In einigen Fällen kann der Betätigungsmechanismus ein Keil sein. In anderen Fällen kann es sich bei dem Betätigungsmechanismus um eine Schraube mit Doppelgewinde handeln.

Bei der Achsaufnahme eines Luftklappendrehantriebs kommt es - speziell bei einer runden Achse der Luftklappe - auf eine kraft- und formschlüssige, einerseits belastbare und anderseits zur Übertragung des Drehmoments ausreichend feste mechanische Kontaktierung der Luftklappenachse an.

Eine Aufgabe der vorliegenden Erfindung besteht darin, eine Achsaufnahme anzugeben, mittels derer eine besonders belastbare kraft- und formschlüssige Fixierung an einer Achse möglich ist.

Diese Aufgabe wird mittels einer Achsaufnahme mit den Merkmalen des Anspruchs 1 gelöst. Die Achsaufnahme ist zur Fixierung an einer Achse eine Luftklappe oder dergleichen, nämlich einer Vorrichtung in einer Anlage für die Heizung, Lüftung oder Kühlung in einem Gebäude, bestimmt und eingerichtet. Zur Fixierung an einer Achse umfasst die Achsaufnahme gegenläufig bewegliche Komponenten. Diese sind gegenläufig beweglich, indem sie in entgegengesetzten Richtungen jeweils in Richtung auf eine von der Achsaufnahme aufgenommene Achse beweglich sind, also in entgegengesetzten Richtungen jeweils in Richtung auf diejenige Achse beweglich sind, an welcher die Achsaufnahme zu fixieren ist. Zur Unterscheidung werden die gegenläufig beweglichen Komponenten als zugseitige Komponenten und als druckseitige Komponenten bezeichnet. Die oder jede zugseitige Komponente ist in einer ersten Richtung in Richtung auf die Achsoberfläche beweglich. Die oder jede druckseitige Komponente ist in einer der ersten Richtung entgegengesetzten zweiten Richtung in Richtung auf die Achsoberfläche beweglich. Die gegenläufig beweglichen Komponenten sind also entweder Teil der Druckseite der Achsaufnahme oder Teil der Zugseite der Achsaufnahme.

Bei der hier vorgeschlagenen Achsaufnahme ist vorgesehen, dass die Achsaufnahme auf der Zug- oder auf der Druckseite oder auf der Zug- und auf der Druckseite zumindest zwei miteinander kombinierbare Komponenten aufweist. Die Achsaufnahme ist also zug- und/oder druckseitig zumindest zweiteilig. Eine der zumindest zwei Komponenten kommt beim Fixieren einer Achse mit der Achsoberfläche in Kontakt. Diese wird als achsnahe Komponente bezeichnet. Eine weitere der zumindest zwei Komponenten gewährleistet die Beweglichkeit in Richtung auf die von der Achsaufnahme aufgenommene Achse und kommt beim Fixieren der Achse mit einer Oberfläche der achsnahen Komponente in Kontakt. Diese wird zur Unterscheidung von der achsnahen Komponente als achsferne Komponente bezeichnet.

Bei einer druckseitigen Zweiteiligkeit - wie dies beim weiter unten beschriebenen Ausführungsbeispiel der Fall ist - handelt es sich bei den zumindest zwei druckseitigen Komponenten um zwei als Bolzen und als Druckbügel bezeichnete Komponenten. Der Druckbügel ist die achsnahe Komponente und der Bolzen ist die achsferne Komponente. Von den zumindest zwei miteinander kombinierbaren Komponenten gewährleistet eine (die achsferne Komponente; auf der Druckseite zum Beispiel der Bolzen) die Beweglichkeit in Richtung auf eine von der Achsaufnahme aufgenommene Achse und die andere Komponente (achsnahe Komponente; auf der Druckseite zum Beispiel der Druckbügel) nimmt bei einer Fixierung der Achsaufnahme an der jeweiligen Achse an einer form- und kraftschlüssigen Fixierung der Achse mittels der Achsaufnahme teil. Diese letztere Komponente nimmt an dieser Fixierung nur teil, denn sie ist selbst Teil entweder der Druck- oder der Zugseite der Achsaufnahme und die eigentliche Fixierung erfolgt im Rahmen eines Zusammenwirkens von Zug- und Druckseite.

Eine spezielle Besonderheit der hier vorgeschlagenen Achsaufnahme besteht darin, dass die (zug- oder druckseitigen) zumindest zwei miteinander kombinierbaren Komponenten (achsferne Komponente, achsnahe Komponente) im kombinierten Zustand einen Spalt einschließen.

Der Vorteil des von der achsnahen und der achsfernen Komponente im kombinierten und lastfreien Zustand eingeschlossenen Spalts besteht in einer besseren Lastverteilung innerhalb der bevorzugt aus einem Sintermaterial hergestellten, direkt an der Achsoberfläche anliegenden achsnahen Komponente (bei dem weiter unten beschriebenen Ausführungsbeispiel ist dies der Druckbügel). Aufgrund des Spalts kann sich die achsnahe Komponente in Richtung auf die achsferne Komponente elastisch verformen. Dabei wird die lichte Weite des Spalts kleiner und der Spalt kann auch verschwinden. Die elastische Verformung bewirkt eine Zug- und eine Druckspannung in der achsnahen Komponente. Aufgrund des Spalts wird die insbesondere bei einer Herstellung der achsnahen Komponente aus einem Sintermaterial grundsätzlich kritische Zugspannung großflächig verteilt. Die grundsätzlich eher unkritische Druckspannung entsteht im Wesentlichen an einem Punkt, an dem ansonsten eine Zugspannung wirksam wäre, welche bei Überschreiten von Belastungsobergrenzen zu einem Bruch der an der Achsoberfläche anliegenden Komponente führt.

Ein weiterer Vorteil der elastischen Verformung der achsnahen Komponente besteht in einem aufgrund der elastischen Verformung resultierenden flächenmäßig größeren Formschluss zwischen der Oberfläche der sich elastisch verformenden Komponente und der Achsoberfläche. Auch wenn die Vergrößerung der an dem Formschluss teilnehmenden Fläche zum Teil nur minimal sein mag, wird von einer Verbesserung des Formschlusses und damit auch des Kraftschlusses ausgegangen.

Ein nochmals weiterer Vorteil der hier vorgeschlagenen Neuerung ergibt sich aus der zumindest einseitigen (druck- und/ oder zugseitig) Zweiteiligkeit der dortigen Komponenten (achsnahe und achsferne Komponente). Bei einer druckseitigen Zweiteiligkeit sind die zumindest zwei Komponenten der Bolzen als achsferne Komponente und der Druckbügel als achsnahe Komponente. Beide Komponenten sind lösbar miteinander kombinierbar und im einsatzbereiten Zustand der Achsaufnahme lösbar miteinander kombiniert. Diese lösbare Kombinierbarkeit erlaubt vorteilhaft bedarfsweise einen Austausch der achsnahen Komponente, also zum Beispiel des Druckbügels. Die achsnahe Komponente kann - als Verschleißteil - ausgetauscht werden, zum Beispiel wenn eine auf dessen Oberfläche (weiter unten als Druckbügelkontaktfläche bezeichnet) vorgesehene Strukturierung nach mehrfacher und/oder langzeitiger Verwendung zurückgeht.

Bei einer Ausführungsform der Achsaufnahme weisen die miteinander kombinierbaren und den Spalt einschließenden Komponenten - achsnahe Komponente, achsferne Komponente - einander zugewandte konvexe und konkave Oberflächen auf, nämlich eine der Komponenten eine konvexe Unterseite und die andere Komponente eine konkave Oberseite. Dabei weist die bei der form- und kraftschlüssigen Fixierung der Achse an der Achsoberfläche anliegende Komponente, also die achsnahe Komponente, die der anderen Komponente (achsferne Komponente) zugewandte konvexe Unterseite auf. Diese Formgebung bewirkt beim Fixieren einer Achse mittels der Achsaufnahme eine durch die Formgebung bestimmte elastische Verformung der achsnahen Komponente und damit in der achsnahen Komponente die oben beschriebene Verteilung von Zug- und Druckspannung.

Bei einer nochmals weiteren Ausführungsform der Achsaufnahme weist die bei der form- und kraftschlüssigen Fixierung einer Achse an der Achsoberfläche anliegende Komponente - die achsnahe Komponente - eine V-förmige Kontaktfläche auf und beim Fixieren einer Achse resultieren einerseits Kontaktstellen der V-förmigen Kontaktfläche auf der Achsoberfläche sowie andererseits Kontaktstellen zwischen der konvexen Unterseite der an der Achsoberfläche anliegenden Komponente (konvexe Unterseite der achsnahen Komponente) und der konkaven Oberseite der anderen Komponente (konkave Oberseite der achsfernen Komponente). Indem ein Abstand zwischen den Kontaktstellen auf der V-förmigen Kontaktfläche kleiner ist als ein Abstand zwischen jeweils einem inneren Ende der Kontaktstellen der einander zugewandten konvexen und konkaven Oberflächen resultiert eine großflächige Verteilung der beim Fixieren auftretenden, grundsätzlich kritischen Zugkräfte in der achsnahen Komponente.

Eine andere Bedingung, welche zu einer solchen großflächigen Verteilung der Zugkräfte in der achsnahen Komponente führt, lässt sich mit den Öffnungsweiten zweier Winkel formulieren und entsprechend ist bei einer Achsaufnahme der hier vorgeschlagenen Art bevorzugt vorgesehen, dass die Öffnungsweite eines Winkels zwischen zwei Tangenten, nämlich zwei im Bereich der Randpunkte der konvexen Unterseite der an der Achsoberfläche anliegenden Komponente (achsnahe Komponente) angelegten Tangenten, kleiner ist als die Öffnungsweite eines Winkels zwischen zwei Tangenten, welche der V-förmigen Kontaktfläche derselben Komponente (achsnahe Komponente) folgen, nämlich Tangenten, welche zumindest an den äußeren Randpunkten der V-förmigen Kontaktfläche an dieser anliegen.

Bei einer speziellen Ausführungsform der Achsaufnahme ist vorgesehen, dass die Achsaufnahme auf der Zugseite als bewegliche Komponente einen Zugbügel aufweist, wobei zur Beweglichkeit des Zugbügels ein Gewinde (Innengewinde) des Zugbügels mit einem Gewinde (Außengewinde) einer Mutter im Eingriff ist. Das Gewinde im Zugbügel wird im Folgenden mitunter kurz als Zugbügelgewinde bezeichnet. Der Zugbügel weist das Zugbügelgewinde in einem zur Unterscheidung als Zugbügeloberteil bezeichneten Bereich auf und dort beginnt das Zugbügelgewinde an einer Unterseite des Zugbügeloberteils und endet unterhalb einer Oberseite des Zugbügeloberteils. Aufgrund des unterhalb der Oberseite des Zugbügeloberteils endenden Zugbügelgewindes verbleibt auf der Oberseite des Zugbügeloberteils zu der angrenzenden Oberfläche der Mutter, nämlich zu dem angrenzenden Außengewinde, ein umlaufender Ringspalt.

Der Vorteil eines solchen Ringspalts besteht insbesondere darin, dass dieser eine ohne den Ringspalt zu erwartende Konzentration von Spannungen im Zugbügeloberteil in einem eng begrenzten Bereich vermeidet. Die Gefahr einer Überschreitung von Belastungsobergrenzen wird somit vermieden oder ist zumindest deutlich reduziert. Der Zugbügel kann damit auch aus geringer belastbaren und preiswerteren Materialien hergestellt werden und ist zum Beispiel ein Sintermetallteil. Die form- und kraftschlüssige Fixierung kann damit in einer ausreichend belastbaren Art und Weise mittels eines aus einem vergleichsweise preiswerten Material hergestellten Zugbügels bewirkt werden.

Die hier vorgeschlagene Achsaufnahme kommt bevorzugt zur Verwendung in einem Luftklappendrehantrieb und als Teil eines Luftklappendrehantriebs in Betracht. Die Achsaufnahme wird dann an einer Achse einer Luftklappe oder dergleichen, jedenfalls einer Vorrichtung in einer Anlage für die Heizung, Lüftung oder Kühlung in einem Gebäude, fixiert. Aufgrund der Fixierung wirkt ein von dem Luftklappendrehantrieb umfasster Antrieb mittelbar auf die fixierte Achse und bewirkt eine Drehung der Achse. Eine jeweilige Luftklappe oder dergleichen wird dann geöffnet oder geschlossen oder zumindest in eine andere Stellung gebracht.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand führen.

Es zeigen
- FIG 1: eine Achsaufnahme in einer Explosionsdarstellung,
- FIG 2: die Achsaufnahme gemäß FIG 1 in einer Schnittdarstellung,
- FIG 3: einzelne Komponenten einer Achsaufnahme gemäß FIG 1, nämlich einen Bolzen und einen Druckbügel,
- FIG 4: Bezeichnungen zur Bezugnahme auf einzelne wesentliche Charakteristika von Bolzen und Druckbügel,
- FIG 5: und
- FIG 6: die Achsaufnahme gemäß FIG 1 mit der Schnittebene wie in FIG 2 bzw. einer weiteren Schnittebene,
- FIG 7: eine Vergrößerung aus der Schnittdarstellung mit der weiteren Schnittebene in FIG 6 sowie
- FIG 8: und
- FIG 9: eine weitere Komponente der Achsaufnahme gemäß FIG 1, nämlich einen Zugbügel.

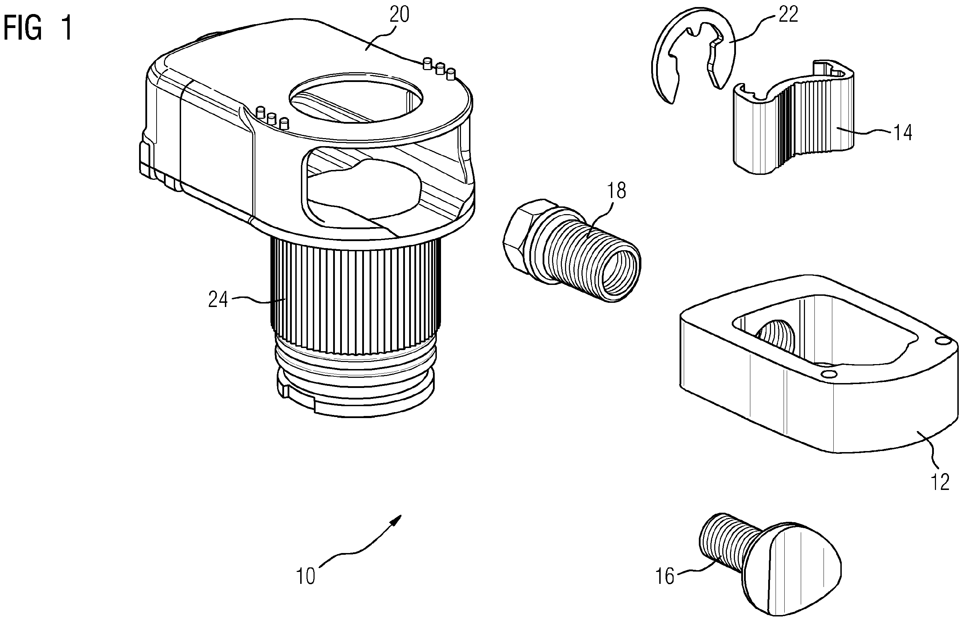

Die Darstellung in FIG 1 zeigt exemplarisch und in einer Explosionsdarstellung eine Ausführungsform einer erfindungsgemäßen Achsaufnahme 10. Eine Achsaufnahme 10 kann auch als Achsbefestigung oder als Achsadapter - oder im Englischen als shaft adapter - bezeichnet werden. Solche oder ähnliche Begriffe sind Synonyme. Hier und im Folgenden wird die Bezeichnung Achsaufnahme 10 verwendet.

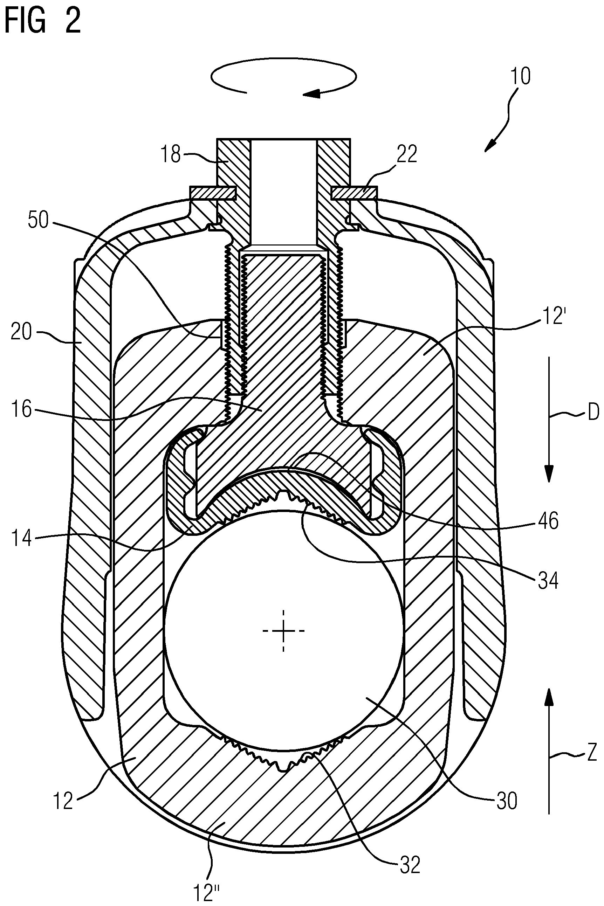

Achsaufnahmen 10 sind grundsätzlich an sich bekannt und zur Befestigung an einer drehbaren Achse 30 (FIG 2) bestimmt, insbesondere einer Achse einer Luftklappe oder dergleichen in einer Anlage für die Heizung, Lüftung oder Kühlung in einem Gebäude. Eine zur Befestigung an einer solchen Achse 30 einer Luftklappe oder dergleichen bestimmte Achsaufnahme 10 ist Teil einer als Luftklappendrehantrieb fungierenden Vorrichtung oder kommt als Teil einer solchen Vorrichtung in Betracht.

Wie in der Darstellung in FIG 1 gezeigt, umfasst eine Achsaufnahme 10 der hier vorgeschlagenen Art mehrere Teile, die im Folgenden mitunter einzeln oder zusammen als Komponente bzw. Komponenten bezeichnet werden, nämlich einen Zugbügel 12, einen Druckbügel 14, einen im Folgenden kurz als Bolzen 16 bezeichneten V-Kopf-Bolzen und eine Mutter 18 (Hülsenmutter). Die Mutter 18 weist in grundsätzlich an sich bekannter Art endseitig ein Formschlusselement zu deren Betätigung auf. Als endseitiges Formschlusselement ist hier exemplarisch ein mittels eines Steckschlüssels oder dergleichen kontaktierbarer Sechskantkopf gezeigt. Die Mutter 18 weist des Weiteren entlang eines Schaftabschnitts in ebenfalls grundsätzlich an sich bekannter Art ein Außengewinde und ein Innengewinde auf. Auf dem Außengewinde der Mutter 18 läuft ein entsprechendes Gewinde (Innengewinde; Zugbügelgewinde) des Zugbügels 12. In dem Innengewinde der Mutter 18 läuft ein entsprechendes Gewinde (Außengewinde) des Bolzens 16. Der Bereich des Zugbügels 12 mit dem Innen-/Zugbügelgewinde wird - nur zu Unterscheidungszwecken und ohne Bezug auf eine spätere Einbaulage - als Zugbügeloberteil 12' bezeichnet.

Alle vorgenannten Komponenten (Zugbügel 12, Druckbügel 14, Bolzen 16 und Mutter 18) befinden sich im gebrauchsfähigen Zustand der Achsaufnahme 10 in einem Gehäuse 20 der Achsaufnahme 10 und zwar in einer Art und Weise, bei welcher die Mutter 18 (mittels der entsprechenden Gewinde) einerseits mit dem Zugbügel 12 und andererseits mit dem Bolzen 16 im Eingriff ist und der Druckbügel 14 am kopfseitigen Ende (am freien Ende) des Bolzens 16 angebracht ist. Das Gehäuse 20 ist ebenfalls eine Komponente der Achsaufnahme 10.

Der Druckbügel 14 ist bei der gezeigten Ausführungsform in axialer Richtung einer mittels der Achsaufnahme zu fixierenden Achse 30 so breit, wie dies das Gehäuse 20 zulässt. Aufgrund dieser Breite resultiert eine vergleichsweise große in Richtung auf eine zu fixierende Achse 30 weisende Oberfläche, welche bei einer Fixierung einer Achse 30 zumindest teilweise als Formschlussfläche wirksam ist. Diese Oberfläche ist zum Beispiel in Form einer gerippten/gezahnten Oberfläche mit parallelen Rippen strukturiert. Diese Rippen verlaufen in Richtung einer Längsachse einer mittels der Achsaufnahme zu fixierenden Achse 30 (also in Richtung der vorerwähnten Breite des Druckbügels 14). Es ergeben sich also auch vergleichsweise große Längen der einzelnen Rippen. Diese Längen bewirken eine großflächige Auflage auf der Achsoberfläche und eine gute Kraft-/Lastverteilung.

Das Gehäuse 20 weist einen auf der Außenoberfläche abschnittsweise gezahnten zylindrischen Fortsatz 24 auf. Mittels dieses Fortsatzes 24 wird in an sich bekannter Art und Weise eine Drehbewegung eines Antriebs (nicht gezeigt) eines Luftklappendrehantriebs (ebenfalls nicht gezeigt) oder dergleichen auf die Achsaufnahme 10 übertragen. Dies bewirkt bei einer an einer Achse 30 (FIG 2) fixierten Achsaufnahme 10 eine entsprechende Drehung der Achse 30 und damit zum Beispiel das Öffnen einer Luftklappe (ebenfalls nicht gezeigt) oder dergleichen.

Der Zugbügel 12 ist zum Beispiel ein Sintermetallteil. Der Bolzen 16 ist zum Beispiel ein Metalldrehteil und der Druckbügel 14 kann aus einem Sintermaterial hergestellt sein. Als Sintermaterial kommt zum Beispiel eine Stahlpulver-NickelLegierung in Betracht. Der Zugbügel 12 weist bevorzugt auf einer in Richtung auf eine zu fixierende Achse 30 weisenden Oberfläche eine ähnliche Strukturierung auf, wie dies oben für den Druckbügel 14 erläutert wurde, also insbesondere eine gerippte/gezahnte Oberfläche mit parallelen Rippen.

Der Druckbügel 14 ist im Rahmen seiner Materialeigenschaften in gewissem Umfang elastisch verformbar. Eine Komponente aus einem Sintermaterial ist preiswert und vergleichsweise einfach auch mit vergleichsweise komplexen Konturen und/oder Oberflächenstrukturen herstellbar. Sintermaterialien vermögen bekanntlich Druckspannungen vergleichsweise gut aufzunehmen, wohingegen Zugspannungen eher kritisch sind. Als Material des Gehäuses 20 kommt zum Beispiel Zinkdruckguss in Betracht, insbesondere ein Druckguss mittels sogenannter Zamak-Legierungen.

Die Darstellung in FIG 2 zeigt die vorgenannten Komponenten (Zugbügel 12, Druckbügel 14, Bolzen 16, Mutter 18 und Gehäuse 20) im miteinander kombinierten Zustand und in einer Schnittdarstellung. Die Schnittebene verläuft entlang einer Mittellängsachse der Mutter 18. Das Gehäuse 20 weist für eine solche Aufnahme von Zugbügel 12, Druckbügel 14, Bolzen 16 und Mutter 18 entsprechende Öffnungen auf, nämlich eine erste Öffnung, durch welche die Gesamtheit dieser Komponenten in das Gehäuse 20 einführbar ist, und eine gegenüberliegende zweite Öffnung, durch welche das freie Ende der Mutter 18 aus dem Gehäuse 20 herausragt und dort eine Kontaktierung des Formschlusselements zur Betätigung der Mutter 18 erlaubt. Dort werden diese Komponenten (Zugbügel 12, Druckbügel 14, Bolzen 16, Mutter 18) im miteinander kombinierten Zustand mittels eines Sprengrings (s.a. FIG 1) 22 im Gehäuse 20 fixiert.

Die Aufnahme dieser Komponenten in dem Gehäuse 20 bewirkt eine drehfeste Lagerung (gegen Verdrehungen beim Betätigen der Mutter 18 gesicherte Lagerung) des Zugbügels 12 einerseits sowie des Druckbügels 14 und des Bolzens 16 andererseits jeweils in dem Gehäuse 20. Die drehfeste Lagerung ergibt sich, indem das Gehäuse 20 die Komponenten formschlüssig oder zumindest im Wesentlichen formschlüssig aufnimmt. Insoweit wird auf die Darstellung in FIG 1 verwiesen. Eine in Richtung der Vertikalachse des Blatts mit dieser Darstellung gemessene Dimension zumindest des Zugbügels 12 und des Druckbügels 14 entspricht in etwa der in derselben Richtung gemessenen Weite der Öffnung im Gehäuse 20. Bei einer Drehung der Mutter 18 können sich also der Zugbügel 12 und der Druckbügel 14 (und mit dem Druckbügel 14 der Bolzen 16) im Gehäuse 20 nicht mitdrehen und anstelle einer Drehung resultiert eine translatorische Bewegung entlang der Gewinde der Mutter 18.

Aufgrund der drehfesten Lagerung bewirkt eine Betätigung (Drehbewegung) der Mutter 18 - in an sich bekannter Art und Weise - eine gegenläufige Bewegung von Zugbügel 12 einerseits sowie der Kombination von Bolzen 16 und Druckbügel 14 andererseits. Der Zugbügel 12 einerseits sowie der Bolzen 16 und der Druckbügel 14 andererseits werden entsprechend als zug- bzw. druckseitige Komponenten der Achsaufnahme 10 bezeichnet.

Die gegenläufige Bewegung ist eine gegenläufige Bewegung entlang einer durch die Längsachse der Mutter 18 definierten Achse. Bei einer Betätigung der Mutter 18 - in der Darstellung in FIG 2 mittels des Kreispfeils oberhalb des kopfseitigen Endes der Mutter 18 gezeigt - bewegt sich der Zugbügel 12 (oder die oder jede zugseitige Komponente) in Richtung auf das kopfseitige Formschlusselement der Mutter 18 und die Kombination aus Druckbügel 14 und Bolzen 16 (oder die oder jede druckseitige Komponente) in die entgegengesetzte Richtung. Diese beiden Bewegungen sind in der Darstellung in FIG 2 mittels seitlicher Pfeile veranschaulicht. Der in der Darstellung nach unten weisende Pfeil veranschaulicht die Bewegung von Druckbügel 14 und Bolzen 16. Der Pfeil ist mit dem Buchstaben "D" (für Druckbügel) bezeichnet. Der in der Darstellung nach oben weisende Pfeil veranschaulicht die Bewegung des Zugbügels 12 und ist mit dem Buchstaben "Z" (für Zugbügel) bezeichnet.

Der Zugbügel 12 hat im weitesten Sinne eine O-Form und umschließt eine Öffnung für eine Achse 30. In der Darstellung in FIG 2 ist eine an einer Achse 30 angebrachte Achsaufnahme 10 gezeigt und entsprechend befindet sich die Achse in dieser Öffnung im Zugbügel 12 und ist vom Zugbügel 12 und vom Druckbügel 14 eingefasst. Durch Betätigung der Mutter 18 und der damit bewirkten gegenläufigen Bewegung der zug- und druckseitigen Komponenten wird die Achsaufnahme 10 an der Achse 30 fixiert. Im Rahmen einer solchen Betätigung der Mutter 18 kommen eine im Wesentlichen V-förmige Kontaktfläche 32 auf Seiten des Zugbügels 12 sowie eine ebenfalls im Wesentlichen V-förmige Kontaktfläche 34 auf Seiten des Druckbügels 14 mit einem Abschnitt der Oberfläche der Achse 30 (Achsoberfläche) in Kontakt. Die im Wesentlichen V-förmige Kontaktfläche 32 auf Seiten des Zugbügels 12 befindet sich am in axialer Richtung des Zugbügelgewindes gegenüberliegenden Ende des Zugbügels 12. Dieser Bereich des Zugbügels 12 wird - entsprechend der Bezeichnung des gegenüberliegenden Endes als Zugbügeloberteil 12' und nur zur Unterscheidung, also ohne einen Bezug zu einer eventuellen späteren Einbaulage - als Zugbügelunterteil 12" bezeichnet. Das Zugbügeloberteil 12' kann auch als Zugbügeljoch bezeichnet werden, denn dieses verbindet die beiden seitlichen Abschnitte des Zugbügels 12 miteinander. Das Zugbügeloberteil 12' (das Zugbügeljoch) und das Zugbügelunterteil 12" sind mit den jeweils angrenzenden Abschnitten des Zugbügels 12 einstückig verbunden.

Beim Festziehen der Mutter 18 bewirkt der Kontakt der im Wesentlichen V-förmigen Kontaktfläche 32 im Bereich des Zugbügelunterteils 12" sowie der ebenfalls im Wesentlichen V-förmigen Kontaktfläche 34 auf Seiten des Druckbügels 14 mit der Achsoberfläche eine kraft- und formschlüssige Fixierung der Achsaufnahme 10 an der Achse 30. Die Achsaufnahme 10 weist demnach mit dem Zugbügel 12 und der dortigen Kontaktfläche 32 eine Zugseite sowie mit dem Bolzen 16 und dem Druckbügel 14 und dessen Kontaktfläche 34 eine Druckseite auf; die zug- und druckseitigen Komponenten der Achsaufnahme 10 bilden deren Zug- bzw. Druckseite.

Die beiden vorgenannten Kontaktflächen 32, 34 werden im Folgenden zur Unterscheidung als Zugbügelkontaktfläche 32 und Druckbügelkontaktfläche 34 bezeichnet. Die beiden Kontaktflächen 32, 34 weisen bei der gezeigten Ausführungsform die bereits erwähnte gezahnte/gerippte Oberfläche auf, wobei vorstehende Erhebungen (Rippen) einer solchen Oberflächenstruktur in Richtung einer Längsachse der aufzunehmenden Achse 30 ausgerichtet sind.

Die Belastbarkeit einer Fixierung der Achsaufnahme 10 an einer Achse 30 steigt mit einem möglichst großflächigen Formschluss. Die Formschlussfläche lässt sich grundsätzlich vergrößern, indem die Oberflächen der beiden Kontaktflächen 32, 34 an den Durchmesser einer zu kontaktierenden Achse 30 angepasst sind. Dann ergeben sich anstelle von im Wesentlichen V-förmigen Oberflächen kreisbogenförmige Oberflächen. Mittels kreisbogenförmiger Oberflächen lässt sich aber nur eine Achse 30 mit einem entsprechenden Durchmesser mittels der gesamten Oberfläche der Kontaktflächen 32, 34 erfassen. Eine Achsaufnahme 10 mit solchen Kontaktflächen 32, 34 ist also nur für jeweils genau einen Achsdurchmesser geeignet und für andere Achsdurchmesser werden Kontaktflächen 32, 34 mit entsprechend anderen kreisbogenförmigen Oberflächen benötigt.

Kontaktflächen 32, 34 (zugseitige Kontaktfläche, Zugbügelkontaktfläche 32; druckseitige Kontaktfläche, Druckbügelkontaktfläche 34) mit im Wesentlichen V-förmigen Oberflächen gewährleisten demgegenüber die Verwendbarkeit ein und derselben Achsaufnahme 10 für verschiedene Achsdurchmesser.

V-förmige Kontaktflächen 32, 34 sind neben der bei der Fixierung einer Achsaufnahme 10 an einer Achse 30 wirkenden Druckbelastung aufgrund der V-Form auch einer nicht unerheblichen Zugspannung ausgesetzt, nämlich einer Zugspannung mit einer Kraftrichtung quer zur Kraftrichtung der Druckbelastung. Hier wird zwischen Kraftwirkungen in Form einer Belastung, insbesondere einer Druckbelastung, und einer Spannung, insbesondere einer Zugspannung, unterschieden. Eine Belastung wird von außerhalb in das jeweilige Teil eingetragen (hier durch die Achsoberfläche und die Fixierung an der Achse). Die Druckbelastung führt zu einer elastischen Verformung und aufgrund dieser Verformung - und damit aufgrund der dieser zugrundeliegenden Druckbelastung - resultiert eine Spannung, nämlich eine Zugspannung, im Innern des Teils. Die Zugspannung ergibt sich aufgrund des Anliegens jeder der beiden Seiten der jeweiligen V-förmigen Kontaktflächen 32, 34 auf einem Abschnitt der Achsoberfläche. Die beiden die V-Form bildenden Oberflächen der jeweiligen Kontaktfläche 32, 34 werden dabei gewissermaßen auseinander und nach außen gedrückt. Es ergibt sich also eine vom Mittelpunkt der V-Form ausgehende und in entgegengesetzte Richtungen wirkende Zugspannung. Diese führt bei Erreichen einer Belastungsobergrenze zu einem Bruch der jeweiligen Komponente, also zum Beispiel zu einem Bruch des Druckbügels 14.

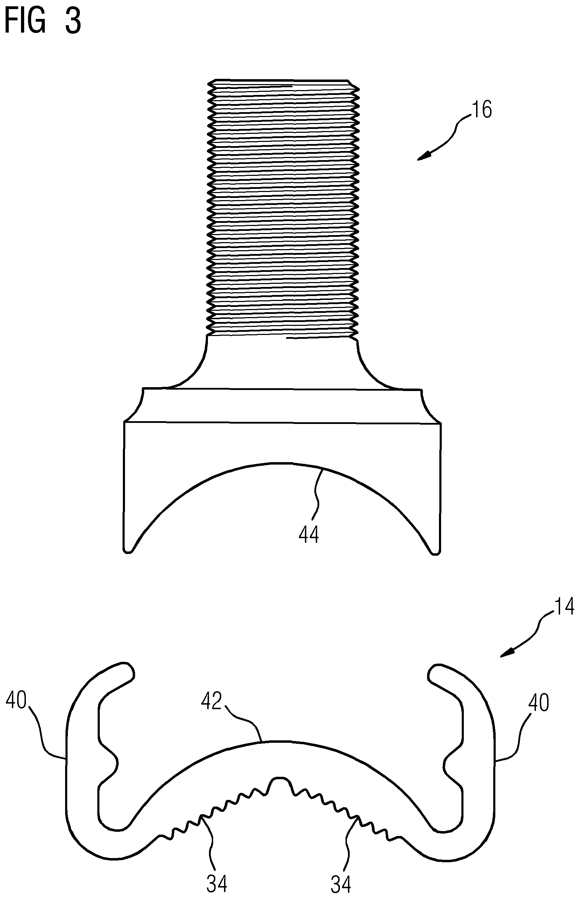

Zur Reduktion solcher Spannungen und speziell zur Vermeidung eines Bruchs einer Komponente ist zuvorderst zumindest einseitig - zug- und/oder druckseitig - zumindest eine Zweiteiligkeit der gegenläufig bewegten Komponenten der Achsaufnahme 10 vorgesehen. Bei der hier vorgeschlagenen Ausführungsform ist diese Zweiteiligkeit (zumindest zwei Teile/zwei Komponenten) auf der Druckseite gegeben, indem dort der Bolzen 16 als erstes Teil (erste Komponente; achsferne Komponente) und der mit dem Bolzen 16 kombinierte Druckbügel 14 als zweites Teil (zweite Komponente; achsnahe Komponente) fungieren. Die Darstellung in FIG 3 zeigt diese beiden Komponenten (Druckbügel 14, Bolzen 16) der Achsaufnahme 10 einzeln, also ohne die restlichen Komponenten der Achsaufnahme 10 und in voneinander gelöstem Zustand.

Die nachfolgende Beschreibung wird auf Basis der gezeigten Ausführungsform und der dortigen Zweiteiligkeit auf der Druckseite fortgesetzt. Dabei ist stets mitzulesen, dass die bei der gezeigten Ausführungsform auf der Druckseite gegebene Zweiteiligkeit (zumindest zwei Teile) alternativ oder zusätzlich auch auf der Zugseite gegeben sein kann. Insoweit ist im Folgenden speziell bei jeder Erwähnung eines Druckbügels 14 (achsnahe Komponente) und eines Bolzens 16 (achsferne Komponente) eine entsprechende Zweiteiligkeit auf der Zugseite mitzulesen, zum Beispiel in Form eines im wesentlichen O-förmigen Zugrahmens als achsferne Komponente und eines mit dem Zugrahmen kombinierbaren und die zugseitige Kontaktfläche bildenden und entsprechend als achsnahe Komponente fungierenden Zugrahmeninnenteils (zwei Teile) anstelle eines einteiligen Zugbügels 12.

Die miteinander in dieselbe Richtung beweglichen Komponenten (achsnahe und achsferne Komponente) der Achsaufnahme 10 - bei der gezeigten Ausführungsform der Druckbügel 14 und der Bolzen 16 - sind lösbar miteinander verbindbar und im einsatzfähigen Zustand der Achsaufnahme 10 lösbar miteinander verbunden. Bei der gezeigten Ausführungsform ist der Druckbügel 14 (achsnahe Komponente) lösbar am Bolzen 16 (achsferne Komponente) angebracht und wird im in das Gehäuse 20 eingeführten Zustand in der angebrachten Position auch mittels des Gehäuses 20 am Bolzen 16 gehalten. Bei der gezeigten Ausführungsform ist dafür der Druckbügel 14 klammerartig ausgeführt, wobei die klammerartige Ausführung darin besteht, dass der Druckbügel 14 seitlich an ein Mittelteil anschließende Arme 40 aufweist. Mittels dieser seitlichen Arme 40 umgreift der Druckbügel 14 im am Bolzen 16 angebrachten Zustand einen zur Halterung des Druckbügels 14 bestimmten, vergrößerten Abschnitt (Bolzenkopf) des Bolzens 16. Die Länge der seitlichen Arme 40 und die Position von deren Angriff am Bolzenkopf sind so gewählt, dass auch bei einem entlang der Mutter 18 maximal abgesenkten Bolzen 16 der Angriffspunkt nicht bis in den Bereich der für den Durchtritt der Achse 30 bestimmten Öffnung im Gehäuse 20 gelangt. Der Druckbügel 14 kann also auch bei maximal abgesenktem Bolzen 16 nicht aus dem Gehäuse 20 herausfallen.

Zur Anbringung am Bolzen 16 wird der Druckbügel 14 zum Beispiel mit seinen seitlichen Armen 40 in einer Bewegungsrichtung quer zur Längsachse des Bolzens 16 über den Bolzenkopf geschoben. Zusätzlich oder alternativ ist auch eine Anbringung des Druckbügels 14 am Bolzen 16 durch Verrasten am Bolzenkopf möglich. Dann weisen die seitlichen Arme 40 des Druckbügels 14 und der Bolzenkopf entsprechende, grundsätzlich an sich bekannte Konturen für eine Rastverbindung auf (Rastnase und Rastnasenaufnahme in jeweils gegenüberliegenden Oberflächen).

Weiter oben war zur Reduktion von Zugspannungen und speziell zur Vermeidung eines Bruchs einer Komponente eine zumindest zweiteilige zug- und/oder druckseitige Ausführung eingeführt worden. Zusätzlich ist vorgesehen, dass zwischen jeweils zwei druck- oder zugseitigen, miteinander verbundenen Komponenten der Achsaufnahme 10, also zwischen der jeweiligen achsnahen und achsfernen Komponente, zumindest im lastfreien Zustand ein Abstand zwischen einander zugewandten Flächenabschnitten dieser beiden Komponenten verbleibt.

Bei der gezeigten Ausführungsform handelt es sich bei diesen zwei Komponenten um den Druckbügel 14 (achsnahe Komponente) und den Bolzen 16 (achsferne Komponente) und Druckbügel 14 und Bolzen 16 sind zum Beispiel miteinander kombiniert, indem der Druckbügel 14 am Bolzen 16 angebracht ist. Bei der gezeigten Ausführungsform besteht der vorerwähnte Abstand entsprechend zwischen den einander zugewandten Flächenabschnitten dieser beiden Komponenten. Allgemein besteht dieser Abstand zwischen der jeweiligen achsnahen und der achsfernen Komponente. Die betreffende Fläche des Druckbügels 14 ist die Unter- oder Innenseite 42 des Druckbügels 14 und wird im Folgenden als Druckbügelunterseite 42 (Druckbügelinnenseite) bezeichnet und die Druckbügelunterseite 42 umfasst die im am Bolzen 16 angebrachten Zustand dem Bolzen 16 zugewandte Fläche ohne die innenseitigen Flächen der seitlichen Arme 40. Die betreffende Fläche des Bolzens 16 ist dessen Ober- oder Innenseite 44 und wird entsprechend als Bolzenoberseite 44 (Bolzeninnenseite) bezeichnet und umfasst die der Druckbügelunterseite 42 zugewandte Fläche des Bolzens 16.

Die Begriffe Druckbügelunterseite 42 und Druckbügelinnenseite einerseits sowie Bolzenoberseite 44 und Bolzeninnenseite andererseits bezeichnen jeweils dasselbe und sind entsprechend austauschbar. Die Beschreibung wird jedoch auf Basis der Begriffe Druckbügelunterseite 42 sowie Bolzenoberseite 44 fortgesetzt.

Der zumindest im lastfreien Zustand verbleibende Abstand zwischen der Druckbügelunterseite 42 und der Bolzenoberseite 44 wird im Folgenden kurz als Spalt 46 (s. FIG 2; die Bezugslinie endet zumindest im Bereich des Orts des - im Vergleich zur Größe der umgebenden Komponenten schmalen - Spalts 46 ) bezeichnet.

Die Druckbügelunterseite 42 ist konvex gewölbt und die Bolzenoberseite 44 ist konkav gewölbt. Mit dieser Form nimmt die Bolzenoberseite 44 den Druckbügel 14 mit dessen Druckbügelunterseite 42 im Wesentlichen formschlüssig (bei Berücksichtigung des im lastfreien Zustand verbleibenden Spalts 46) auf. Allgemein formuliert weisen die achsnahe und die achsferne Komponente 14, 16 einander zugewandte konvexe und konkave Oberflächen 42, 44 auf, nämlich die achsnahe Komponente 14 eine konvexe Unterseite 42 und die achsferne Komponente 16 eine konkave Oberseite 44, und diese beiden Oberflächen 42, 44 schließen den Spalt 46 ein.

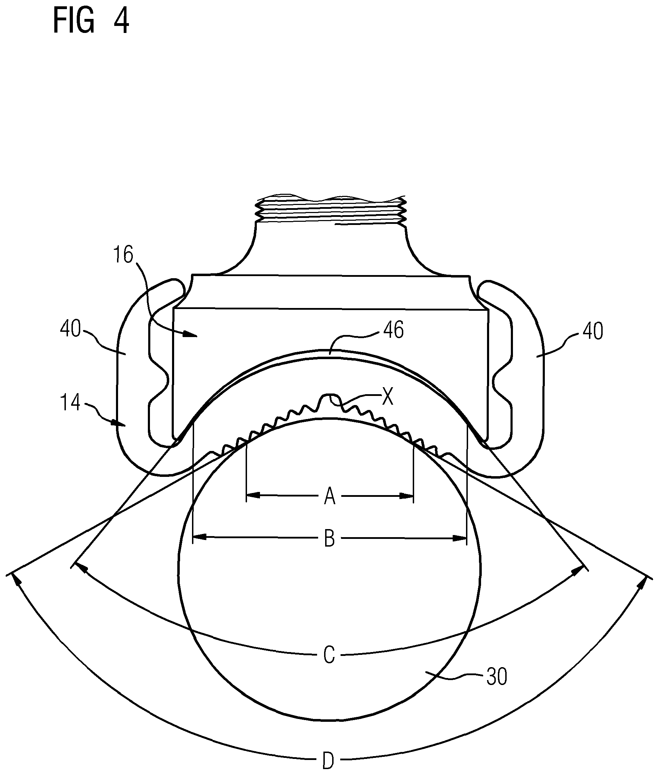

In der Darstellung in FIG 3 - und auch in der Darstellung in FIG 4 - ist auch in der dortigen schematisch vereinfachten Darstellung erkennbar, dass die Radien (zumindest die Radien im Bereich der jeweiligen Scheitelpunkte) der Druckbügelunterseite 42 und der Bolzenoberseite 44 nicht gleich sind.

Im Interesse einer besseren Lesbarkeit der weiteren Beschreibung wird von einer kreisbogenförmigen Druckbügelunterseite 42 und einer ebenso kreisbogenförmigen Bolzenoberseite 44 ausgegangen. Dann kann auf die Radien entsprechender (gedachter) Vollkreise Bezug genommen werden. Eine kreisbogenförmige Druckbügelunterseite 42 und eine ebenso kreisbogenförmige Bolzenoberseite 44 stellt jedoch nur eine spezielle, gleichwohl bevorzugte Ausführungsform dar. Grundsätzlich kommen auch elliptische oder parabolische Konturen für die Druckbügelunterseite 42 und die Bolzenoberseite 44 in Betracht. Dann sind bei solchen Konturen die Radien von Kreisen relevant, die im Bereich der Scheitelpunkte der Druckbügelunterseite 42 und der Bolzenoberseite 44 einbeschrieben sind. Insoweit war oben formuliert worden: "die Radien (zumindest die Radien im Bereich der jeweiligen Scheitelpunkte)". Anstelle einer solchen "Langform" der Formulierung kann bei einer Annahme einer kreisbogenförmigen Druckbügelunterseite 42 und einer ebenso kreisbogenförmigen Bolzenoberseite 44 kurz von den jeweiligen Radien (also den die Radien der jeweiligen Vollkreise) gesprochen werden. Weil anstelle kreisbogenförmiger Konturen auch elliptische oder parabolische Konturen in Betracht kommen, ist bei jeder Erwähnung eines Radius nicht nur der Radius des jeweiligen Vollkreises, sondern auch der Radius eines im Bereich des Scheitelpunkts der jeweiligen Kontur einbeschriebenen Kreises mitzulesen.

Der Radius der Druckbügelunterseite 42 (zumindest der Radius der Druckbügelunterseite 42 im Bereich des dortigen Scheitelpunkts) ist größer als der Radius der Bolzenoberseite 44 (zumindest der Radius der Bolzenoberseite 44 im Bereich des dortigen Scheitelpunkts). Aufgrund dieser Unterschiedlichkeit der Radien verbleibt bei einem am Bolzen 16 angebrachten Druckbügel 14 im lastfreien Zustand der oben erwähnte Spalt 46 (siehe auch FIG 4). Dieser Spalt 46 (eine im lastfreien Zustand lichte Weite des Spalts 46) ist im Bereich der einander gegenüberliegenden Scheitelpunkte der Druckbügelunterseite 42 und der Bolzenoberseite 44 am größten.

Die Darstellung in FIG 4 zeigt den Druckbügel 14 in einer am Bolzen 16 angebrachten Konfiguration und in Kontakt mit dem Abschnitt der Oberfläche einer Achse 30, nämlich einem Kontakt, wie er sich beim Fixieren einer kompletten Achsaufnahme 10 (FIG 2) an der Achse 30 ergibt. In der Darstellung sind zur erleichterten Bezugnahme einzelne Charakteristika, die eine bevorzugte, gleichwohl optionale Ausführungsform der Achsaufnahme 10 kennzeichnen, mit Großbuchstaben bezeichnet:
Beim Fixieren einer Achse 30 ergibt sich ein Kontakt zwischen der Achsoberfläche und dem Druckbügel 14, nämlich der Achsoberfläche einerseits und der Druckbügelkontaktfläche 34 andererseits. Der Buchstabe A bezeichnet den Abstand zwischen den Kontaktstellen (im Wesentlichen linienförmige Kontaktstellen mit einem Verlauf quer zu der Zeichnungsebene der FIG 4 und in dieser Richtung über die gesamte Druckbügelkontaktfläche 34) des Druckbügels 14 an der Achsoberfläche und eine Strecke zwischen diesen Kontaktstellen. Beim Fixieren einer Achse 30 wirkt an den äußeren Punkten dieser Strecke eine Druckbelastung (in axialer Richtung des Bolzens 16; quer zur Mittellängsachse der Achse 30) auf den Druckbügel 14.

Beim Fixieren einer Achse 30 ergibt sich ferner ein Kontakt zwischen der Druckbügelunterseite 42 (FIG 3) und der Bolzenoberseite 44 (FIG 3). Der Buchstabe B bezeichnet den Abstand zwischen jeweils einem inneren Ende der Kontaktstellen der Druckbügelunterseite 42 und der Bolzenoberseite 44 und eine Strecke zwischen diesen Kontaktstellen. Die Kontaktstellen reichen vom äußeren Ende der Bolzenoberseite 44 bis zu einem im Vergleich dazu weiter innen auf der Bolzenoberseite 44 liegenden Bereich. Hier liegt also eine flächige Kontaktstelle vor (auch diese Kontaktstelle erstreckt sich quer zur Zeichnungsebene der FIG 4 und in dieser Richtung über die gesamte Bolzenoberseite 44). Entlang dieser Strecke und in die beiden Richtungen des Doppelpfeils wirkt beim Fixieren einer Achse 30 eine Zugspannung auf den Bolzen 16 im Bereich des dortigen Bolzenkopfs. Zudem wirkt beim Fixieren einer Achse 30 an den äußeren Punkten dieser Strecke eine Druckbelastung (in axialer Richtung des Bolzens 16) auf den Bolzenkopf. Hier wird beim Fixieren einer Achse 30 die an den Kontaktstellen des Druckbügels 14 an der Achsoberfläche in den Druckbügel 14 eingetragene Druckbelastung an den Bolzenkopf weitergegeben.

Der Buchstabe C bezeichnet die Öffnungsweite eines Winkels zwischen zwei im Bereich der Randpunkte der Druckbügelunterseite 42 an die Druckbügelunterseite 42 angelegten gedachten Tangenten.

Der Buchstabe D bezeichnet die Öffnungsweite eines Winkels zwischen zwei der V-förmigen Kontur der Druckbügelkontaktfläche 34 (FIG 2) folgenden gedachten Tangenten.

Nach dem hier vorgeschlagenen Ansatz ist bevorzugt vorgesehen, dass die Länge der Distanz B (der Abstand zwischen den inneren Enden der Kontaktstellen zwischen Druckbügelunterseite 42 und Bolzenoberseite 44) stets größer als die Länge der Distanz A (der Abstand zwischen den Kontaktstellen zwischen Druckbügel 14 und Achsoberfläche) ist: B > A.

Dieses Längenverhältnis führt beim Fixieren einer Achse 30 zu einer die Weite des Spaltes 46 verringernden elastischen Verformung des Druckbügels 14. Der Druckbügel 14 wird also beim Fixieren einer Achse 30 mit seiner Druckbügelunterseite 42 in Richtung auf die Bolzenoberseite 44 elastisch verformt. Dies führt zu einer entlang der Druckbügelunterseite 42 verteilten Zugspannung im Druckbügel 14 (aufgrund des vergleichsweise großen Radius der Druckbügelunterseite 42 ergeben sich die Verteilung der Zugspannung auf eine vergleichsweise große Fläche und keine Konzentration der Zugspannung in einem eng begrenzten Bereich). Gleichzeitig bewirkt die elastische Verformung eine Druckspannung im Druckbügel 14 entlang der Druckbügelkontaktfläche 34, die als in dem mit dem Buchstaben X bezeichneten Bereich des Druckbügels 14 konzentriert gedacht werden kann.

Soweit bezüglich der Randpunkte der Strecke A und den dortigen Kontaktstellen zwischen Druckbügel 14 und Achsoberfläche von linienförmigen Kontaktstellen ausgegangen wird, bezeichnet dies eine Situation, bei der bei einer gezahnten/gerippten Oberfläche der Druckbügelkontaktfläche 34 beidseitig jeweils eine Rippe an der Achsoberfläche anliegt. Dies ist eine idealisierte Betrachtung und in der Praxis kann es durchaus zu einer Anlage mehrerer jeweils benachbarter Rippen an der Achsoberfläche kommen. Dann sind in Bezug auf den Abstand zwischen den Kontaktstellen zwischen Druckbügel 14 und Achsoberfläche jeweils die äußeren Kontaktstellen relevant. Insoweit bezeichnet der Buchstabe A dann den Abstand zwischen den äußeren Kontaktstellen des Druckbügels 14 an der Achsoberfläche und die Strecke zwischen diesen äußeren Kontaktstellen. Die Beschreibung wird allerdings auf Basis der idealisierten Betrachtung und einfacher, linienförmiger Kontaktstellen fortgesetzt.

Zusätzlich oder alternativ zu einer Formgebung, welche zu dem oben beschriebenen Längenverhältnis (B > A) führt, ist nach dem hier vorgeschlagenen Ansatz bevorzugt vorgesehen, dass der Winkel C (Winkel aufgrund der Geometrie der Druckbügelunterseite 42) stets kleiner als der Winkel D (Winkel aufgrund der Geometrie der Druckbügelkontaktfläche 34) ist: C < D. Der Winkel C liegt zum Beispiel im Bereich von 80°, zum Beispiel in einem Bereich von 80° ± 40°, insbesondere in einem Bereich von 80° ± 10°. Der Winkel D liegt zum Beispiel im Bereich von 120°. Dies hat sich zum Fixieren unterschiedlicher Achsdurchmesser als praktikabel herausgestellt.

Dieses Längenverhältnis (B > A) und/oder dieses Winkelverhältnis (C < D) führt auf vergleichsweise einfache Art und Weise dazu, dass eine Fixierung einer Achse 30 zu einer elastischen Verformung (wie oben beschrieben) des Druckbügels 14 führt. Die aufgrund der Verformung resultierende Zugspannung im Druckbügel 14 wird auf die Druckbügelunterseite 42 verteilt, nämlich auf den Abschnitt der Druckbügelunterseite 42 zwischen den Randpunkten der mit dem Buchstaben B bezeichneten Strecke. Aufgrund dieser Verteilung der Zugspannung im Druckbügel 14 entlang von dessen Druckbügelunterseite 42 ist diese an jedem Ort geringer als die Belastungsgrenze.

Zusammenfassung: Beim Fixieren einer Achse 30 ergibt sich auf der Druckbügelkontaktfläche 34 eine Druckbelastung an den Endpunkten der mit dem Buchstaben A bezeichneten Strecke (dort liegt die Achsoberfläche an der Druckbügelkontaktfläche 34 an). Aufgrund der beim Fixieren der Achse 30 resultierenden elastischen Verformung des Druckbügels 14 ergibt sich eine Druckspannung im Druckbügel 14, die im Bereich des mit dem Buchstaben X bezeichneten Punkts konzentriert ist. Beim Fixieren einer Achse 30 ergibt sich ferner im Druckbügel 14 im Bereich von dessen Druckbügelunterseite 42 und entlang der Druckbügelunterseite 42 eine zwischen den Endpunkten der mit dem Buchstaben B bezeichneten Strecke verteilte Zugspannung; die Zugspannung ist auf den von den Endpunkten der mit dem Buchstaben B bezeichneten Strecke eingeschlossenen Teil der Fläche der Druckbügelunterseite 42 verteilt.

Auf den mit dem Buchstaben X bezeichneten Bereich des Druckbügels 14 würde ohne den Spalt 46 und die oben beschriebene elastische Verformung beim Fixieren einer Achse 30 eine maximale Zugspannung wirken. An diesem Punkt kann jetzt die aufgrund der elastischen Verformung resultierende Druckspannung konzentriert gedacht werden. Eine Druckspannung ist für ein Sinterteil - wie dies beim Druckbügel 14 gegeben ist - eher unkritisch. Die Zugspannung wirkt auf der Druckbügelunterseite 42 und eine Überschreitung von Belastungsgrenzen ist aufgrund der vergleichsweise großflächigen Verteilung der Zugspannung in normalen Anwendungsszenarien eher nicht zu besorgen.

Ohne einen Spalt 46 oder ohne einen Spalt 46 sowie ohne die spezielle Formgebung von Druckbügelunterseite 42 und Bolzenoberseite 44 (konvex bzw. konkav; C < D) würde beim Fixieren einer Achse 30 auf beiden Seiten der V-förmigen Druckbügelkontaktfläche 34 eine Zugspannung in jeweils unterschiedliche Richtung resultieren, die bei Überschreiten einer Belastungsobergrenze zu einem Bruch des Druckbügels 14 im Bereich des Zusammentreffens der beiden Schenkel der V-förmigen Druckbügelkontaktfläche 34 (FIG 4: Punkt X) führt.

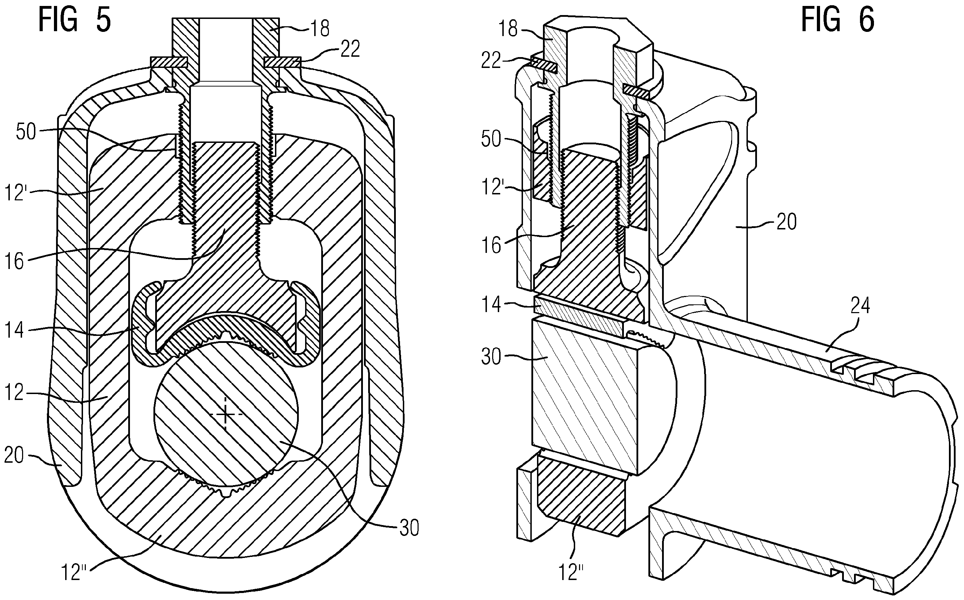

Die Darstellungen in FIG 5 und in FIG 6 zeigen die Achsaufnahme 10 gemäß FIG 1 in zwei nebeneinander platzierten Schnittdarstellungen. In der Darstellung in FIG 5 ist die Achsaufnahme 10 mit einer Schnittebene (erste Schnittebene) wie in FIG 2 gezeigt. In der Darstellung in FIG 6 ist die Achsaufnahme 10 mit einer weiteren Schnittebene gezeigt. Diese weitere Schnittebene steht bei Einschluss einer Längsachse des Bolzens 16 (oder einer Längsachse der Mutter 18) auf der ersten Schnittebene senkrecht.

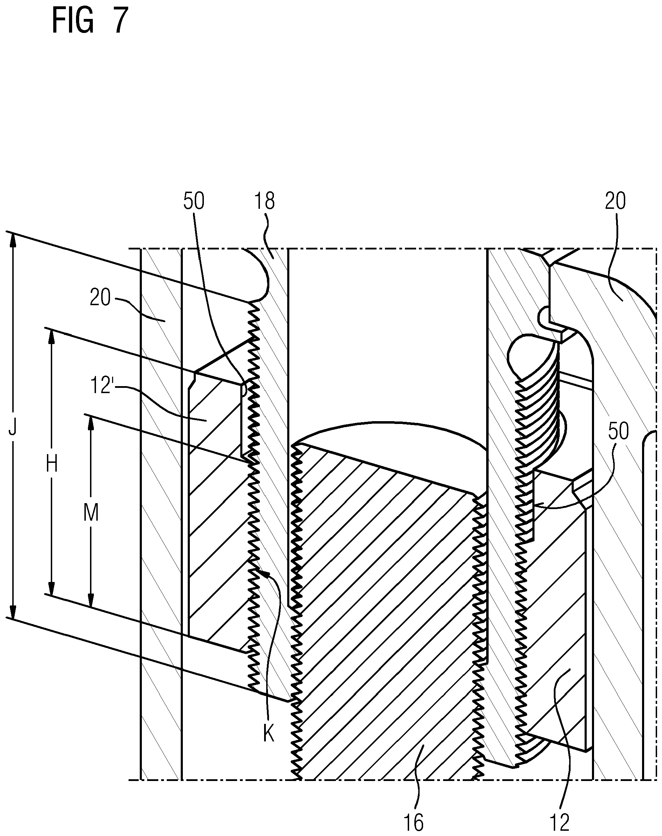

Die Darstellung in FIG 7 zeigt einen vergrößerten Ausschnitt aus der Schnittdarstellung in FIG 6 und dort einen besonderen, gleichwohl grundsätzlich optionalen Aspekt der Achsaufnahme 10, nämlich einen umlaufenden Ringspalt 50. Der Ausschnitt umfasst die Bereiche mit dem Außen- und Innengewinde der Mutter 18 und den entsprechenden Gewindeabschnitten des Zugbügels 12 (des Zugbügeloberteils 12') einerseits und des Bolzens 16 andererseits. Diese Gewindeabschnitte sind mit dem Außen- bzw. Innengewinde der Mutter 18 im Eingriff.

Mittels der seitlichen Bemaßungspfeile sind unterschiedliche Dimensionen in diesem Bereich herausgehoben. Eine Höhe des Zugbügeloberteils 12' (Abstand zwischen einer Unterseite und einer Oberseite des Zugbügeloberteils 12'; Zugbügeloberteilhöhe) ist mit dem Buchstaben H bezeichnet. Eine Länge (Höhe) des mit dem Außengewinde versehenen Schaftabschnitts der Mutter 18 ist mit dem Buchstaben J bezeichnet. Ein Kontaktbereich zwischen Zugbügeloberteil 12' und Mutter 18, also ein Bereich, in dem Zugbügelgewinde und das Außengewinde der Mutter 18 miteinander im Eingriff sind, ist in der Darstellung in FIG 7 mit dem Buchstaben K bezeichnet.

Das Zugbügelgewinde (Innengewinde im Zugbügeloberteil 12') und damit der vorgenannte Kontaktbereich K mit dem Außengewinde der Mutter 18 beginnen auf Seiten des Zugbügeloberteils 12' an der Unterseite des Zugbügeloberteils 12' und enden unterhalb der Oberseite des Zugbügeloberteils 12'. Eine Höhe dieses Kontaktbereichs K entlang des Schaftabschnitts der Mutter 18 ist mit dem Buchstaben M bezeichnet.

Der Kontaktbereich K erstreckt sich in einem gewissen Umfang in axialer Richtung der Mutter 18; es handelt sich also um einen zylindermantelförmigen Formschluss (zylindermantelförmiger Gewindekontakt). Die Höhe M dieses Kontaktbereichs K ist geringer als die Zugbügeloberteilhöhe H (M < H). Aufgrund dieses Höhenunterschieds verbleibt auf der dem Formschlusselement der Mutter 18 zugewandten Oberseite des Zugbügeloberteils 12' der umlaufende Ringspalt 50 (siehe auch FIG 2).

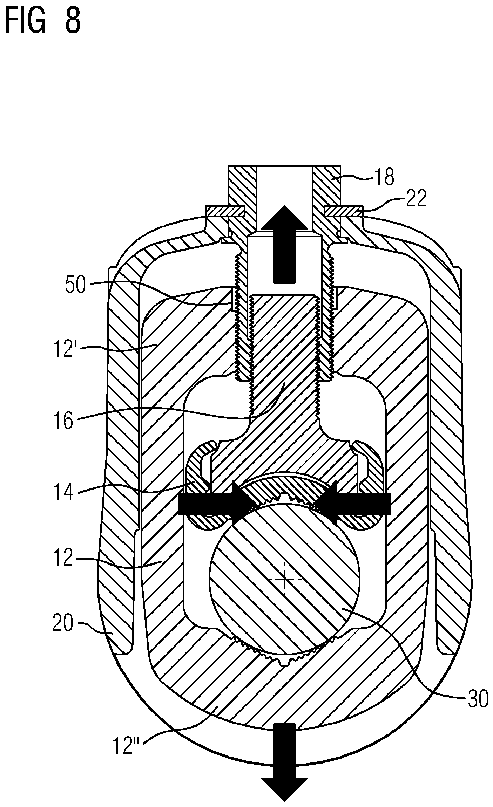

Beim Fixieren einer Achse 30 wirken unterschiedliche Belastungen auf den Zugbügel 12 und speziell das Zugbügeloberteil 12'. In der Darstellung in FIG 8 sind mittels der dortigen Blockpfeile beim Fixieren einer Achse 30 resultierende wesentliche Verformungsrichtungen des Zugbügels 12 gezeigt. Im Bereich des oberen Endes des Ringspalts 50 ergibt sich aufgrund dieser Verformungsrichtungen eine ausgehend von der Gewindebohrung beidseitig nach außen gerichtete Spannung im Zugbügeloberteil 12'. Bei Zugbügeln 12 ohne Ringspalt 50 hat dies bei Überschreiten einer Belastungsobergrenze mitunter zu einem Riss im Zugbügeloberteil 12' geführt. Ein solcher Riss geht von der nach außen gewandten Oberfläche des Zugbügeloberteils 12' aus und verläuft in Richtung der Gewindebohrung im Zugbügeloberteil 12'.

Aufgrund des Ringspalts 50 wird der Ort der aufgrund der oben beschriebenen Verformung resultierenden Spannung im Zugbügeloberteil 12' von einem Ort weiterer Spannungen im Zugbügeloberteil 12', nämlich Spannungen, die beim Fixieren einer Achse 30 aufgrund der Gewindeverbindung zwischen Zugbügel 12 und Bolzen 16 resultieren, getrennt. Ohne den Ringspalt 50 wären diese Spannungen auf einen eng begrenzten Bereich, nämlich im Bereich der nach außen gewandten Oberfläche des Zugbügeloberteils 12', konzentriert. Der Ringspalt 50 vermeidet eine solche Konzentration.

Aufgrund der mittels des Ringspalts 50 vermiedenen Konzentration der beim Fixieren einer Achse 30 wirkenden Spannungen auf einen eng begrenzten Bereich des Zugbügeloberteils 12' kann der Zugbügel 12 aus einem vergleichsweise preiswerten Material hergestellt werden und dieser ist zum Beispiel ein Sintermetallteil. Aus einem Sintermaterial hergestellte Teile sind nicht nur vergleichsweise kostengünstig, sondern erlauben auch vergleichsweise komplexe Konturen und/oder Oberflächenstrukturen.

Bei einem aus einem Sintermaterial hergestellten Zugbügel 12 können zum Beispiel die Oberflächenstrukturen im Bereich der im Wesentlichen V-förmigen Kontaktfläche 32 unmittelbar mit der Herstellung des Zugbügels 12 in dessen Oberfläche im Bereich des Zugbügelunterteils 12" eingebracht werden. Darüber hinaus erlaubt die Herstellung des Zugbügels 12 aus einem Sintermaterial auch eine Fokussierung auf eine stärke Belastbarkeit des Gehäuses 20 und/oder eine stärke Belastbarkeit des Zugbügels 12 selbst.

In Bezug auf die stärkere Belastbarkeit des Gehäuses 20 ist vorgesehen, dass der Zugbügel 12 in zumindest einer großen Oberfläche (Oberfläche quer zur Längsachse einer mittels der Achsaufnahme 10 fixierten Achse 30), insbesondere in beiden großen Oberflächen, eine umlaufende Fase 52 (abgeschrägte Fläche oder Radius beim Übergang von der großen Oberfläche zur angrenzenden Seitenfläche) bzw. umlaufende Fasen 52 aufweist. Diese umlaufende(n) Fase(n) 52 erlaubt bzw. erlauben eine als Eckverstärkung fungierende Materialaufdickung im Gehäuse 20. Ohne eine solche Eckverstärkung verbleibt aufgrund der Fase(n) 52 zwischen dem Gehäuse 20 und dem in das Gehäuse 20 eingeführten Zugbügel 12 ein von der jeweiligen Fase 52 und dem gegenüberliegenden Gehäuseabschnitt eingeschlossener Zwischenraum. Genau diesen Zwischenraum nimmt die vorerwähnte Eckverstärkung im Gehäuse 20 ein oder zumindest im Wesentlichen ein. Mit der Eckverstärkung nimmt das Gehäuse 20 den Zugbügel 12 auch im Bereich der Fase(n) 52 formschlüssig auf. Die Eckverstärkung befindet sich in Bereichen, in denen jeweils zwei Wandabschnitte des Gehäuses 20 aufeinander stoßen. Eine Eckverstärkung in diesem Bereich verstärkt das Gehäuse 20 an solchen, ansonsten vergleichsweise stark bruchgefährdeten Stellen.

In Bezug auf die stärkere Belastbarkeit des Zugbügels 12 ist vorgesehen, dass dieser im Bereich des Zugbügeloberteils 12' und des dortigen Zugbügelgewindes eine im Folgenden zur Unterscheidung als Zugbügelaufdickung 54 bezeichnete Materialaufdickung 54 aufweist. Die Zugbügelaufdickung 54 ist einstückig mit dem Zugbügel 12 verbunden und verstärkt den Rand um die Bohrung mit dem Zugbügelgewinde und gleicht im Besonderen den aufgrund des Ringspaltes 50 resultierenden Materialverlust in diesem Bereich aus.

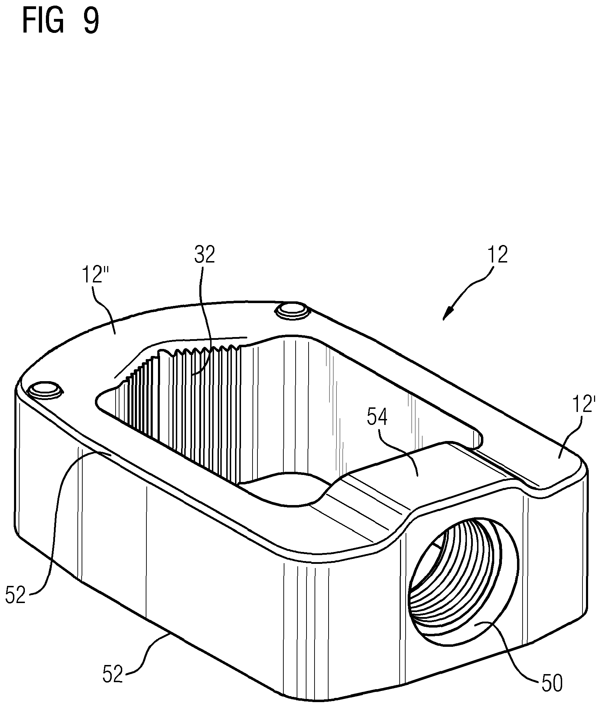

Die Darstellung in FIG 9 zeigt den Zugbügel 12 mit seitlichen Fasen 52 und der Zugbügelaufdickung 54. Zur Aufnahme des Zugbügels 12 mit der Zugbügelaufdickung 54 weist das Gehäuse 20 eine Ausbuchtung 20' (FIG 2) auf.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Der Schutzbereich der Erfindung wird durch die Ansprüche festgelegt.

Einzelne im Vordergrund stehende Aspekte der hier eingereichten Beschreibung lassen sich damit kurz wie folgt zusammenfassen: Angegeben werden eine Achsaufnahme 10 für einen Luftklappendrehantrieb und ein Luftklappendrehantrieb mit einer solchen Achsaufnahme 10. Die Achsaufnahme 10 umfasst gegenläufig und jeweils in Richtung auf eine von der Achsaufnahme 10 aufgenommene Achse 30 bewegliche Komponenten 12, 14, 16. Diese sind Teil einer Zug- oder Druckseite der Achsaufnahme 10. Auf der Zug- und/oder auf der Druckseite weist die Achsaufnahme 10 zumindest zwei miteinander kombinierbare Komponenten 14, 16 auf, von denen eine - achsnahe Komponente - bei einer Fixierung der Achsaufnahme 10 an der Achse 30 mit der Achsoberfläche in Kontakt ist und an einer form- und kraftschlüssigen Fixierung der Achse 30 mittels der Achsaufnahme 10 teilnimmt und die andere - achsferne Komponente - die Beweglichkeit in Richtung auf die von der Achsaufnahme 10 aufgenommene Achse 30 gewährleistet, wobei die zug- oder druckseitigen, miteinander kombinierbaren Komponenten 14, 16, also die achsnahe und die achsferne Komponente, im kombinierten Zustand einen Spalt 46, nämlich einen Spalt 46 zwischen einerseits konvex und andererseits konkav gewölbten Oberflächen, einschließen.

### Bezugszeichenliste

- 10: Achsaufnahme
- 12: Zugbügel
- 12': Zugbügeloberteil
- 12": Zugbügelunterteil
- 14: Druckbügel
- 16: Bolzen
- 18: Mutter
- 20: Gehäuse
- 20': Ausbuchtung
- 22: Sprengring
- 24: zylindrischer Fortsatz (am Gehäuse)

- 30: Achse
- 32: Kontaktfläche, Zugbügelkontaktfläche
- 34: Kontaktfläche, Druckbügelkontaktfläche

- 40: (seitlicher) Arm (am Druckbügel)
- 42: Unterseite, Druckbügelunterseite
- 44: Oberseite, Bolzenoberseite
- 46: Spalt

- 50: Ringspalt
- 52: Fase
- 54: Zugbügelaufdickung

- A: Abstand zwischen Kontaktstellen des Druckbügels und der Achsoberfläche
- B: Abstand zwischen einem inneren Ende der Kontaktstellen der Druckbügelunterseite und der Bolzenoberseite
- C: Öffnungsweite eines Winkels zwischen zwei an die Druckbügelunterseite angelegten Tangenten
- D: Öffnungsweite eines Winkels zwischen zwei der Kontur der Druckbügelkontaktfläche folgenden Tangenten

- H: Höhe des Zugbügeloberteils
- J: Länge des Außengewindes an der Mutter
- K: Kontaktbereich zwischen Zugbügeloberteil und Mutter
- M: Höhe des Kontaktbereichs K

## Patentansprüche

1. Achsaufnahme (10) zur Fixierung an einer Achse (30), umfassend gegenläufig und jeweils in Richtung auf eine von der Achsaufnahme (10) aufgenommene Achse (30) bewegliche Komponenten (12, 14, 16), wobei die gegenläufig beweglichen Komponenten (12, 14, 16) Teil einer Zug- oder Druckseite der Achsaufnahme (10) sind, **dadurch gekennzeichnet,**
- **dass** die Achsaufnahme (10) auf der Zug- und/oder Druckseite zumindest zwei miteinander kombinierbare Komponenten (14, 16) aufweist, von denen eine die achsnahe Komponente (14) ist und bei einer Fixierung der Achsaufnahme (10) an der Achse (30) an einer form- und kraftschlüssigen Fixierung der Achse (30) mittels der Achsaufnahme (10) teilnimmt und von denen die andere die achsferne Komponente (16) ist und die Beweglichkeit in Richtung auf die von der Achsaufnahme (10) aufgenommene Achse (30) gewährleistet, und
- **dass** die zug- oder druckseitigen, miteinander kombinierbaren Komponenten (14, 16) im kombinierten Zustand einen Spalt (46) einschließen.

2. Achsaufnahme (10) nach Anspruch 1,
- wobei die miteinander kombinierbaren und den Spalt (46) einschließenden Komponenten (14, 16) einander zugewandte konvexe und konkave Oberflächen (42, 44) aufweisen, nämlich eine der Komponenten (14) eine konvexe Unterseite (42) und die andere Komponente (16) eine konkave Oberseite (44),
- wobei die bei der form- und kraftschlüssigen Fixierung der Achse (30) an der Achsoberfläche anliegende Komponente (14) die der anderen Komponente (16) zugewandte konvexe Unterseite (42) aufweist.

3. Achsaufnahme (10) nach Anspruch 2,
- wobei die bei der form- und kraftschlüssigen Fixierung der Achse (30) an der Achsoberfläche anliegende Komponente (14) eine V-förmige Kontaktfläche (34) aufweist,
- wobei beim Fixieren einer Achse (30) einerseits Kontaktstellen der V-förmigen Kontaktfläche (34) auf der Achsoberfläche sowie andererseits Kontaktstellen zwischen der konvexen Unterseite der an der Achsoberfläche anliegenden Komponente (14) und der konkaven Oberseite der anderen Komponente (16) resultieren,
- wobei ein Abstand zwischen den Kontaktstellen auf der V-förmigen Kontaktfläche (34) kleiner ist als ein Abstand zwischen jeweils einem inneren Ende der Kontaktstellen der einander zugewandten konvexen und konkaven Oberflächen (42, 44) .

4. Achsaufnahme (10) nach Anspruch 3, wobei die Öffnungsweite eines Winkels zwischen zwei Tangenten, nämlich zwei im Bereich der Randpunkte der konvexen Unterseite (42) der an der Achsoberfläche anliegenden Komponente (14) angelegten Tangenten, kleiner ist als die Öffnungsweite eines Winkels zwischen zwei der V-förmigen Kontaktfläche (34) folgenden Tangenten.

5. Achsaufnahme (10) nach einem der vorangehenden Ansprüche,
- welche als Komponenten einen Zugbügel (12), einen Druckbügel (14), einen Bolzen (16), eine Mutter (18) und ein Gehäuse (20) umfasst,
- wobei Zugbügel (12), Druckbügel (14), Bolzen (16) und Mutter (18) in einer miteinander kombinierten Konfiguration in das Gehäuse (20) eingesetzt und im Gehäuse (20) fixiert sind,
- wobei Druckbügel (14) und Bolzen (16) als die druckseitige, miteinander kombinierbare Komponenten (14, 16) fungieren, die im kombinierten Zustand den Spalt (46) einschließen und
- wobei der Druckbügel (14) mit einer Druckbügelkontaktfläche (34) beim Fixieren einer Achse (30) mittels der Achsaufnahme (10) an der Achsoberfläche anliegt.

6. Achsaufnahme (10) nach Anspruch 5,
- wobei der Bolzen (16) eine konkave Bolzenoberseite (44) und der Druckbügel (14) eine konvexe Druckbügelunterseite (42) aufweisen,
- wobei der Bolzen (16) mit seiner konkaven Bolzenoberseite (44) den Druckbügel (14) mit seiner konvexen Druckbügelunterseite (42) aufnimmt und
- wobei zwischen der Bolzenoberseite (44) und der Druckbügelunterseite (42) der Spalt (46) verbleibt, den Druckbügel (14) und Bolzen (16) im kombinierten Zustand einschlie-βen.

7. Achsaufnahme (10) nach Anspruch 6
- mit einer V-förmigen Druckbügelkontaktfläche (34),
- wobei beim Fixieren einer Achse (30) einerseits Kontaktstellen der V-förmigen Druckbügelkontaktfläche (34) auf der Achsoberfläche sowie andererseits Kontaktstellen zwischen der konvexen Druckbügelunterseite (42) und der konkaven Bolzenoberseite (44) resultieren,
- wobei ein Abstand zwischen den Kontaktstellen auf der Druckbügelkontaktfläche (34) kleiner ist als ein Abstand zwischen jeweils einem inneren Ende der Kontaktstellen der Druckbügelunterseite (42) und der Bolzenoberseite (44).

8. Achsaufnahme (10) nach Anspruch 7, wobei die Öffnungsweite eines Winkels zwischen zwei im Bereich der Randpunkte der Druckbügelunterseite (42) angelegten Tangenten kleiner ist als die Öffnungsweite eines Winkels zwischen zwei der V-förmigen Druckbügelkontaktfläche (34) folgenden Tangenten.

9. Achsaufnahme (10) nach einem der vorangehenden Ansprüche,
- welche auf der Zugseite als bewegliche Komponente einen Zugbügel (12) aufweist,
- wobei zur Beweglichkeit des Zugbügels (12) ein Gewinde des Zugbügels (12) mit einem Gewinde einer Mutter (18) im Eingriff ist,
- wobei der Zugbügel (12) das Gewinde in einem Zugbügeloberteil (12') aufweist und das Gewinde dort an einer Unterseite des Zugbügeloberteils (12') beginnt und unterhalb einer Oberseite des Zugbügeloberteils (12') endet und
- wobei aufgrund des unterhalb der Oberseite des Zugbügeloberteils (12') endenden Gewindes auf der Oberseite des Zugbügeloberteils (12') ein umlaufender Ringspalt (50) verbleibt.

10. Luftklappendrehantrieb mit einer Achsaufnahme (10) nach einem der vorangehenden Ansprüche.

## Claims

1. Axle receiving arrangement (10) for fixing to an axle (30), said axle receiving arrangement comprising components (12, 14, 16) that can move in opposite directions and in each case move in the direction of an axle (30) that is received by the axle receiving arrangement (10), wherein the components (12, 14, 16) that can move in opposite directions are part of a tensioning side or compressing side of the axle receiving arrangement (10), **characterised in that**
- the axle receiving arrangement (10) has at least two components (14, 16) that can be combined with one another on the tensioning side and/or on the compressing side, of which one is the component (14) which is close to the axle, and in the case of fixing the axle receiving arrangement (10) to the axle (30), participates in a positive-locking and non-positive-locking fixing of the axle (30) by means of the axle receiving arrangement (10) and of which the other is the component (16) which is remote from the axle and ensures the movability in the direction of the axle (30) that is received by the axle receiving arrangement (10) and
- the tensioning-side or compressing-side components (14, 16) that can be combined with one another enclose a gap (46) in the combined state.

2. Axle receiving arrangement (10) according to claim 1,
- wherein the components (14, 16) that can be combined with one another and that enclose the gap (46) have mutually facing convex and concave surfaces (42, 44), namely one of the components (14) has a convex underside (42) and the other component (16) has a concave upper side (44),
- wherein the component (14) that lies against the axle surface in the case of the positive-locking and non-positive-locking fixing of the axle (30) has the convex underside (42) that faces the other component (16).

3. Axle receiving arrangement (10) according to claim 2,
- wherein the component (14) that lies against the axle surface in the case of the positive-locking and non-positive-locking fixing of the axle (30) has a V-shaped contact surface (34),
- wherein in the case of fixing an axle (30), on the one hand contact sites of the V-shaped contact surface (34) result on the axle surface and also on the other hand contact sites result between the convex underside of the component (14) that lies against the axle surface and the concave upper side of the other component (16),
- wherein a gap between the contact sites on the V-shaped contact surface (34) is smaller than a gap between in each case an inner end of the contact sites of the mutually facing convex and concave surfaces (42, 44).

4. Axle receiving arrangement (10) according to claim 3, wherein the opening width of an angle between two tangents, namely two tangents that are applied in the region of the edge points of the convex underside (42) of the component (14) that lies against the axle surface, is smaller than the opening width of an angle between two tangents that follow the V-shaped contact surface (34).

5. Axle receiving arrangement (10) according to one of the preceding claims,
- and said axle receiving arrangement comprises as components a tension bracket (12), a pressure bracket (14), a bolt (16), a nut (18) and a housing (20),
- wherein the tension bracket (12), pressure bracket (14), bolt (16) and nut (18) are inserted into the housing (20) in a configuration in which said tension bracket, pressure bracket, bolt and nut are combined with one another and are fixed in the housing (20),
- wherein the pressure bracket (14) and the bolt (16) function as the compressing-side components (14, 16) that can be combined with one another and that in the combined state enclose the gap (46) and
- wherein the pressure bracket (14) lies with a pressure bracket contact surface (34) against the axle surface in the case of fixing an axle (30) by means of the axle receiving arrangement (10).

6. The axle receiving arrangement (10) as claimed in claim 5,
- wherein the bolt (16) has a concave bolt upper side (44)and the pressure bracket (14) has a convex pressure bracket underside (42),
- wherein the bolt (16) with its concave bolt upper side (44) receives the pressure bracket (14) with its convex pressure bracket underside (42) and
- wherein the gap (46) remains between the bolt upper side (44) and the pressure bracket underside (42) and in the combined state said gap is enclosed by the pressure bracket (14) and bolt (16).

7. Axle receiving arrangement (10) according to claim 6
- having a V-shaped pressure bracket contact surface (34),
- wherein in the case of fixing an axle (30), on the one hand contact sites of the V-shaped pressure bracket contact surface (34) result on the axle surface and also on the other hand contact sites result between the convex pressure bracket underside (42) and the concave bolt upper side (44),
- wherein a gap between the contact sites on the pressure bracket contact surface (34) is smaller than a gap between in each case an inner end of the contact sites of the pressure bracket underside (42) and the bolt upper side (44) .

8. Axle receiving arrangement (10) according to claim 7, wherein the opening width of an angle between two tangents that are applied in the region of the edge points of the pressure bracket underside (42) is smaller than the opening width of an angle between two tangents that follow the V-shaped pressure bracket contact surface (34).

9. Axle receiving arrangement (10) according to one of the preceding claims,
- said axle receiving arrangement has a tension bracket (12) as a movable component on the tensioning side,
- wherein for the movability of the tension bracket (12) a thread of the tension bracket (12) is in engagement with a thread of a nut (18),
- wherein the tension bracket (12) has the thread in a tension bracket upper part (12') and the thread starts in said tension bracket upper part on an underside of the tension bracket upper part (12') and terminates below an upper side of the tension bracket upper part (12') and
- wherein owing to the thread that terminates below the upper side of the tension bracket upper part (12') a circumferential annular gap (50) remains on the upper side of the tension bracket upper part (12').

10. Air vent rotary drive having an axle receiving arrangement (10) according to one of the preceding claims.

## Revendications

1. Logement d'axe (10) destiné à être fixé à un axe (30), comprenant des composants mobiles (12, 14, 16) à l'opposé et respectivement dans la direction d'un axe (30) logé par le logement d'axe (10), dans lequel les composants mobiles dans des directions opposées (12, 14, 16) font partie d'un côté de traction ou de poussée du logement d'axe (10), **caractérisé**
- **en ce que** le logement d'axe (10) présente sur le côté de traction et/ou de poussée au moins deux composants (14, 16) pouvant être combinés l'un avec l'autre, dont l'un est le composant proche de l'axe (14) et lors d'une fixation du logement d'axe (10) à l'axe (30) participe à une fixation de l'axe (30) par complémentarité de formes et de forces au moyen du logement d'axe (10) et dont l'autre est le composant éloigné de l'axe (16) et garantit la mobilité dans la direction de l'axe (30) logé par le logement d'axe (10), et
- **en ce que** les composants (14, 16) pouvant être combinés l'un à l'autre côté traction ou poussée enferment à l'état combiné un intervalle (46).

2. Logement d'axe (10) selon la revendication 1,
- dans lequel les composants (14, 16) pouvant être combinés l'un à l'autre et enfermant l'intervalle (46) présentent des surfaces convexes et concaves tournées l'une vers l'autre (42, 44), à savoir l'un des composants (14) est un côté inférieur convexe (42) et l'autre composant (16) est un côté supérieur concave (44),
- dans lequel le composant (14) jouxtant la surface d'axe lors de la fixation par complémentarité de formes et de forces de l'axe (30) présente le côté inférieur convexe (42) tourné vers l'autre composant (16).

3. Logement d'axe (10) selon la revendication 2,
- dans lequel le composant (14) jouxtant la surface d'axe lors de la fixation par complémentarité de formes et de forces de l'axe (30) présente une surface de contact en forme de v (34),
- dans lequel lors de la fixation d'un axe (30) il en résulte d'une part des points de contact de la surface de contact en forme de v (34) sur la surface d'axe ainsi que d'autre part des points de contact entre le côté inférieur convexe du composant (14) jouxtant la surface d'axe et le côté supérieur concave de l'autre composant (16),
- dans lequel un écart entre les points de contact sur la surface en forme de v (34) est plus petit qu'un écart entre respectivement une extrémité interne des points de contact des surfaces convexe et concave tournées l'une vers l'autre (42, 44).

4. Logement d'axe (10) selon la revendication 3, dans lequel la largeur d'ouverture d'un angle entre deux tangentes, à savoir deux tangentes mises en place dans la zone des points de bord du côté inférieur convexe (42) du composant (14) jouxtant la surface d'axe, est plus petite que la largeur d'ouverture d'un angle entre deux des tangentes suivant la surface de contact en forme de v (34).

5. Logement d'axe (10) selon l'une quelconque des revendications précédentes,
- qui comprend en tant que composants un étrier de traction (12), un étrier de poussée (14), un boulon (16), un écrou (18) et un boîtier (20),
- dans lequel l'étrier de traction (12), l'étrier de poussée (14), le boulon (16) et l'écrou (18) sont insérés dans une configuration combinés les uns avec les autres dans le boîtier (20) et fixés dans le boîtier (20),
- dans lequel l'étrier de poussée (14) et le boulon (16) fonctionnent en tant que composants (14, 16) pouvant être combinés l'un à l'autre côté pression, qui enferment l'intervalle (46) à l'état combiné et
- dans lequel l'étrier de poussée (14) avec une surface de contact d'étrier de poussée (34) jouxte la surface d'axe lors de la fixation d'un axe (30) au moyen du logement d'axe (10).

6. Logement d'axe (10) selon la revendication 5,
- dans lequel le boulon (16) présente un côté supérieur de boulon concave (44) et l'étrier de poussée (14) présente un côté inférieur d'étrier de poussée convexe (42),
- dans lequel le boulon (16) avec son côté supérieur de boulon concave (44) loge l'étrier de poussée (14) avec son côté d'étrier de poussée concave (42) et
- dans lequel entre le côté supérieur de boulon (44) et le côté inférieur d'étrier de poussée (42) l'intervalle (46) est maintenu, que l'étrier de poussée (14) et le boulon (16) enferment à l'état combiné.

7. Logement d'axe (10) selon la revendication 6,
- avec une surface de contact d'étrier de poussée en forme de v (34),
- dans lequel il en résulte lors de la fixation d'un axe (30) d'une part des points de contact de la surface de contact d'étrier de poussée en forme de v (34) sur la surface d'axe ainsi que d'autre part des points de contact entre le côté inférieur d'étrier de poussée convexe (42) et le côté supérieur de boulon concave (44),
- dans lequel un écart entre les points de contact sur la surface de contact d'étrier de poussée (34) est plus petit qu'un écart entre respectivement une extrémité interne des points de contact du côté inférieur d'étrier de poussée (42) et le côté supérieur de boulon (44).

8. Logement d'axe (10) selon la revendication 7, dans lequel la largeur d'ouverture d'un angle entre deux tangentes mises en place dans la zone des points de bord du côté inférieur d'étrier de poussée (42) est plus petite que la largeur d'ouverture d'un angle entre deux tangentes suivant la surface de contact d'étrier de poussée en forme de v (34).

9. Logement d'axe (10) selon l'une quelconque des revendications précédentes,
- qui présente sur le côté de traction un étrier de traction (12) en tant que composant mobile,
- dans lequel pour la mobilité de l'étrier de traction (12) un filetage de l'étrier de traction (12) est en prise avec un filetage d'un écrou (18),
- dans lequel l'étrier de traction (12) présente le filetage dans une partie supérieure d'étrier de traction (12') et le filetage à cet endroit commence au niveau d'un côté inférieur de la partie supérieure d'étrier de traction (12') et se termine en dessous d'un côté supérieur de la partie supérieure d'étrier de traction (12') et
- dans lequel en raison du filetage se terminant en dessous du côté supérieur de la partie supérieure d'étrier de traction (12') sur le côté supérieur de la partie supérieure d'étrier de traction (12') un intervalle annulaire périphérique (50) est maintenu.

10. Servomoteur pour volet d'air avec un logement d'axe (10) selon l'une quelconque des revendications précédentes.
